# EUROPEAN PATENT SPECIFICATION

(11) **EP 1 512 272 B1**
(45) Date of publication and mention of the grant of the patent: **13.08.2008**
(21) Application number: 03732911.7
(22) Date of filing: 30.05.2003
(51) Int. Cl.: H04M 15/00, H04L 12/14, H04L 29/14

(54) **CHARGING IN COMMUNICATION NETWORKS**
VERGEBÜHRUNG IN KOMMUNIKATIONSNETZEN
FACTURATION DANS DES RESEAUX DE COMMUNICATION

(30) Priority: 10.06.2002 GB 0213255
(43) Date of publication of application: 09.03.2005
(73) Proprietor: Nokia Corporation, 02150 Espoo (FI)
(72) Inventor: KOSKINEN, Juha-Pekka, FIN-13210 Hameenlinna (FI); VALLINEN, Juha, FIN-33900 Tampere (FI)
(74) Representative: Slingsby, Philip Roy
(86) International application number: PCT/IB2003/002604
(87) International publication number: WO 2003/105457

(56) References cited:
- GB-A- 2 354 404
- JP-A- 63 300 666
- US-A- 6 088 328
- US-A- 6 108 300

## Description

This invention relates to charging in communication networks, especially third generation (UMTS) networks.

The implementation of charging systems in third generation (3G) networks presents a number of difficulties. Some of these are detailed below.

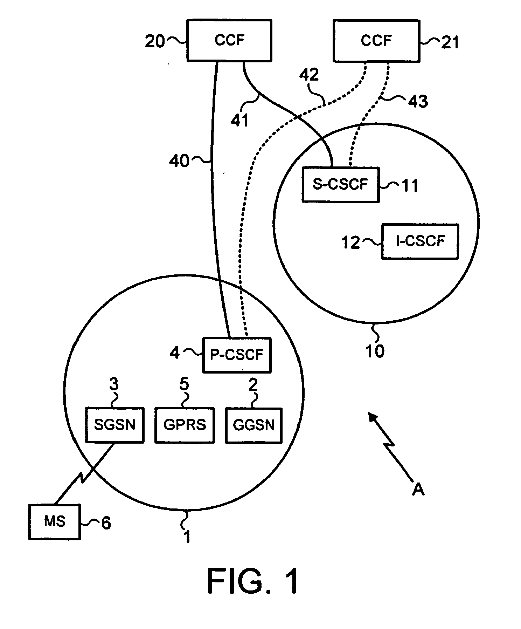

The proposed architecture for charging in 3G networks is illustrated in figure 1. The system of figure 1 includes a third generation communication network A. The network has a core network section and other peripheral network units. Only the units that are pertinent to the present description are shown in figure 1.

The core network VPLMN (Visiting Public Land Mobile Network) 1 of network A comprises a GGSN (gateway GPRS support node) 2, an SGSN (serving GPRS support node) 3, a P-CSCF (proxy call server control function) 4 and a GPRS (general packet radio service) support unit 5. A subscriber terminal 6 is attached to network A. For the purpose of this example, network A is he home network of the subscriber of mobile station terminal 6.
Network A also has a core network HPLMN (home public land mobile network) 10. The HPLMN comprises a S-CSCF (serving call server control function) 11 and an I-CSCF (interrogating call server control function) 12.

There is also a CCF (charging collection function) unit 20 available to network A. CCF 20 could be part of network A or could be elsewhere. The CCF is responsible for collecting information on charges to a subset of mobile subscribers, in this example including the subscriber of terminal 6. Each network may include more than one CCF to handle multiple subsets of subscribers. The CCF may also be known as a CCP (charging control point).

In practice the CCF is likely to be a charging gateway (CG). The CCF is also known as a charging collection function.

When a call is made in network A charges may be generated by the P-CSCF 4 or by the S-CSCF 11, depending on the basis for the respective charges. Information on the charges is then passed to the CCF 20 that is responsible for the account of the subscriber who is to be charged. The CCF gathers together the charges and at the end of a billing period passes them to a billing unit which bills the subscriber accordingly, either by issuing an invoice or by debiting the subscriber's pre-paid account.

This arrangement is considerably more complex than arises in 2G (second generation) GSM (global system for mobile communications) charging, because there can be numerous different accounting sessions that need to be combined in the CCF in order to accumulate all the charges for the session.

One problem that can arise during charging is that there is a failure of communications over the links 40, 41 to the CCF 20. This may happen because of a physical failure of the link or because of a protocol breakdown. This could cause charging data that is sent to the CCF to be lost, in which case it might be impossible to charge the subscriber correctly for the session. To help deal with this problem it has been proposed that charging data could be sent to two CCFs. In figure 1 this is illustrated by the existence of CCF 21, which is connected by links 42, 43 to the P-CSCF 4 and the S-CSCF 11. Although this makes it less likely that charging data will be lost, it introduces some additional problems. First, if a link to one of the CCFs fails then that CCF may be unaware that it has only received part of the charging data, and even if it is identified that at least one of the CCFs only has partial data then in order to acquire the complete data the data stored in both CCFs must be combined. As a result, additional steps must be taken to correlate the data stored in each of the CCFs. This greatly complicates the charging system.

US 6,108,300 describes a backup system for network devices. A backup network device detects if a primary network device has failed. If so, the backup device informs the primary device, and the devices switch IP addresses, so that the backup device is acting as the primary device for handling packets. In the background section there is also described a system where clients to the primary device maintain an IP address of the backup device. When the client determines that the primary device has failed, the backup device may be used.

There is a need for an improved way to tackle the acquisition of charging data.

According to one aspect of the present invention there is provided a communication system for supporting a communication session of a terminal, the communication system comprising: at least one charging unit arranged to monitor the communication session and generate a plurality of charging messages together indicating a total charge for the communication session; a primary charging data collection unit, a secondary charging data collection unit and a backup charging data collection unit, each charging collection unit being capable of receiving and correlating charging messages for the communication session; wherein: the or each charging unit is arranged to transmit the charging messages to the primary charging data collection unit or, if the charging unit determines that a charging message for the communication session has not been correctly received by the primary charging data collection unit, to the secondary charging data collection unit; and the primary and secondary charging data collection units are arranged to, if they have received only some of the charging messages for the communication session, transmit the content of the charging messages that they have received for the session to the backup charging data collection unit.

According to a second aspect of the present invention there is provided a method for supporting a communication session of a terminal by means of a communication system comprising: at least one charging unit, a primary charging data collection unit, a secondary charging data collection unit and a backup charging data collection unit, each charging collection unit being for receiving and correlating charging messages for the communication session; the method comprising: initiating the communication session; monitoring the communication session by means of the charging unit; generating at the charging unit a plurality of charging messages together indicating a total charge for the communication session; and determining at the charging unit whether any of the charging messages previously generated for a session has not been correctly received by the primary charging data collection unit; and if not transmitting charging messages for the session to the primary charging data collection unit otherwise transmitting charging messages for the session to the secondary charging data collection unit; and the primary and secondary charging data collection units, if they have received only some of the charging messages for the communication session, transmitting the content of the charging messages that they have received for the session to the backup charging data collection unit.

According to a second aspect of the present invention there is provided a backup charging data collection unit for operation in a communication system capable of supporting a communication session of a terminal, the communication system comprising: at least one charging unit arranged to monitor the communication session and generate a plurality of charging messages together indicating a total charge for the communication session; a primary charging data collection unit and a secondary charging data collection unit, the primary and secondary each charging collection units being capable of receiving and correlating charging messages for the communication session; and the or each charging unit is arranged to transmit the charging messages to the primary charging data collection unit or, if the charging unit determines that a charging message for the communication session has not been correctly received by the primary charging data collection unit, to the secondary charging data collection unit; and the primary and secondary charging data collection units are arranged to, if they have received only some of the charging messages for the communication session, transmit the content of the charging messages that they have received for the session to the backup charging data collection unit; the backup data collection unit being arranged to receive and correlate charging messages for the communication session sent to it by the primary and secondary data collection units.

Preferably the backup data collection unit is arranged to, on receiving from the primary and secondary charging data collection units content of charging messages for the session, eliminate duplicate content of charging messages from the received content of charging messages. Preferably the or each charging unit is arrange to, for each of the charging messages for the session that is sent to the secondary charging data collection unit, set a flag in the message indicating that the content of the message may be duplicated in data received by the primary data collection unit, and the backup data collection unit is arranged to eliminate duplicate content of charging messages from the received content of charging messages at least partially in dependence on the setting of the flag in portions of that received content.

Preferably the terminal is associated with a subscriber entity and the communication system includes several charging data collection units and a subscriber database which stores for each subscriber a record of which of the charging data collection units is the primary charging data unit and which is the secondary charging data unit for charging data relating to charges to be attributed to that subscriber. Preferably the communication system is arranged to, on establishment of the session, access the subscriber database to determine which of the charging data collection units is to be the primary charging data collection unit for the session and which of the charging data collection units is to be the secondary charging data collection unit for the session. It will be appreciated that in such arrangements, and optionally in others too, the primary and secondary charging data collection units perform the functions of those units in respect of a session for which they are acting in those roles. For other sessions the same physical units could have their functional roles reversed. Thus a unit that acts as a primary charging data collection unit for one session could act as a secondary data collection unit for another session, and a unit that acts as a secondary charging data collection unit for one session could act as a primary data collection unit for another session.

Preferably the primary and secondary charging data collection units are arranged to, on receiving a charging message from a charging unit, transmit an acknowledgement for that message to that charging unit.

Preferably the or each charging unit is arranged to determine that a charging message has not been correctly received by the primary charging data collection unit if on expiry of a preset period after it has transmitted a charging message the charging unit has not received an acknowledgement for the charging message.

Preferably the charging messages which together indicating a total charge for the communication session include a start message indicative of the commencement of the session.

Preferably the charging messages which together indicating a total charge for the communication session include a charge message indicative of a charge for at least a portion of the session.

Preferably the charging messages which together indicating a total charge for the communication session include a stop message indicative of termination of the session.

The primary charging data collection unit may be arranged to determine that it has received only some of the charging messages for the communication session if on expiry of a preset period after receiving the start message for the session it has not received a stop message for the session. Alternatively, or in addition, it may be arranged to make the same determination if on expiry of a preset period after receiving a charge message for the session no further message for the session has been received there.

The secondary charging data collection unit may be arranged to determine that it has received only some of the charging messages for the communication session if it has received a charge or stop message but no start message for the session. Alternatively, it could send the content of all charging messages it receives for the session to the backup charging data collection unit.

Preferably the terminal is a mobile station capable of communicating by radio with the communication system.

The primary, secondary and backup charging data collection units could be CCFs. The or each charging unit could be a CSCF. The communication system could be a third generation mobile communications system.

The backup charging data collection unit could be a D-FADC-CCF.

The or each charging unit could be arranged to, if it determines that a charging message for the communication session has not been correctly received by the primary charging data collection unit, transmit no further charging messages for that session to the primary charging data collection unit.

The primary charging data collection unit and the secondary charging data collection unit may be adapted to communicate with the backup charging data collection unit by means of the Diameter protocol. The or each charging unit may be adapted to communicate with the primary charging data collection unit and the secondary charging data collection unit by means of the Diameter protocol.

The system may comprise a plurality of charging data collection units. Each charging data collection unit acting as a primary charging data collection unit in conjunction with a secondary charging data collection unit preferably treats as backup charging data collection unit the same unit as does the corresponding secondary charging data collection unit.

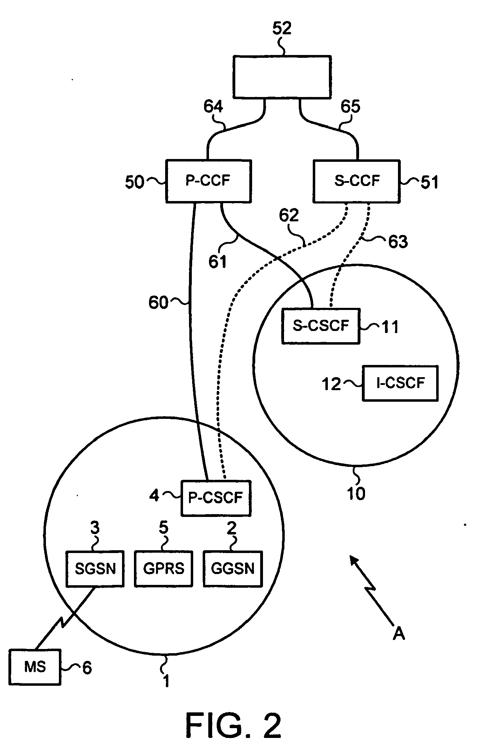

In the drawings, figures 1 and 2 are functional block diagrams of third generation communication systems.

The present invention will now be described by way of example.

Figure 2 shows a 3G communication system in which components that are analogous to those in figure 1 are denoted by the same reference numerals as in figure 1. In figure 2 there are three CCFs: a primary CCF (P-CCF) 50, a secondary CCF (S-CCF) 51 and a default FADC (faulty accounting data collector) CCF (D-FADC-CCF) 52. The P-CCF 50 is connected by links 60, 61 to the P-CSCF 4 and the S-CSCF 11. The S-CCF 51 is connected by links 62, 63 to the P-CSCF 4 and the S-CSCF 11. The D-FADC-CCF 52 is connected by links 64, 65 to the P-CCF and the S-CCF.

In the system of figure 2 there could be numerous CCFs analogous to P-CCF 50 and S-CCF 51, and numerous D-FADC-CCFs analogous to D-FADC-CCF **52.** For clarity, only those three are shown in figure 2. Each CCF has a D-FADC-CCF assigned to it, for the purpose of correlating faulty accounting data. Each subscriber has a primary CCF and a secondary CCF assigned to it. These are chosen so that both the primary and the secondary CCF assigned to a subscriber have the same D-FADC-CCF assigned to them.

The D-FADC-CCF is arranged to correlate the contents of messages carrying accounting data that it may receive the P-CCF and the S-CCF. In doing so it identifies which messages from either of those sources relate to the same communication session. It can then determine which of those messages have been received from both sources, ignore one of each of those messages, and based on the remaining messages for the communication session determine an overall charge.

An example of the operation of the system of figure 2 will now be described.

When the subscriber associated with mobile station 6 registers to a PLMN (in this example the PLMN of network A) in order to conduct a communication session the addresses of the primary and secondary CCFs assigned to that subscriber are downloaded to the relevant P-CSCF 4 and S-CSCF 11. The P-CSCF and the S-CSCF can then start an offline accounting session to the primary CCF for that subscriber, which in this example is taken to be P-CCF 50. Consequently the P-CSCF 4 and the S-CSCF 11 send charging information for the session, as it proceeds, to the P-CCF 50. If the connections 60, 61 to that P-CCF 50 fail during the session the P-CSCF 4 and the S-CSCF 11 set up an offline accounting session to the secondary CCF 51 for the subscriber, which in this example is taken to be S-CCF 51. Failure of a connection 60, 61 may be detected by means of a link-level protocol run over the connections, or by no acknowledgement of a message indicating charging information (e.g. an ACR message - see below) being received by the P-CSCF 4 or the S-CSCF 11, or by failure of the P-CSCF 4 or the S-CSCF 11 even to send such a message. Consequently the P-CSCF 4 and the S-CSCF 11 send charging information for the session, as it proceeds, to the S-CCF 51. That accounting session to the S-CCF 51 is used until the session is released. The session to the P-CCF 50 is terminated when the session to the S-CCF 51 is begun. In this way the P-CCF 50 does not receive an indication that the accounting session has been successfully completed (e.g. by receiving a STOP_RECORD message - see below), so it will be aware that the session has been faulty.

When the session has been released the P-CCF 50 and the S-CCF 51 will both have an incomplete, and therefore faulty set of accounting records for the session. The P-CCF 50 and the S-CCF 51 are configured to, in the event of receiving a faulty set of accounting records for a session, send those records to the D-FADC-CCF that is assigned to them, which in this example is D-FADC-CCF 52. As a result that D-FADC-CCF 52 receives all the available charging records for the session. The D-FADC-CCF 52 correlates the records to establish a combined set of accounting data for the session. That combined set of accounting data can then be used to bill for the call, as appropriate.

It should be noted that since the P-CCF 50 and the S-CCF 51 are configured to pass faulty accounting data for correlation to the backup charging data collection unit, so there is no need to search for faulty records between CCFs.

The manner in which a CCF determines that it has a faulty set of accounting data will now be described. In this example the accounting is performed according to the Diameter protocol. In this protocol accounting is done by means of two messages passed between the CSCFs and the CCFs. The messages for each session have a common unique session ID which identifies messages relating to that session.
1. The ACR (accounting request) message is sent from the client (one of the CSCFs) to a CCF.
2. The ACA (accounting answer) message is an acknowledgement for a previous ACR and is sent from the CCF that received that previous ACR to the client that sent it.
Each ACR or ACA message comprises an attribute value pair (AVP). Each AVP has an attribute which indicates its meaning and a value which indicates the data corresponding to that attribute. The attribute can have forms that include: START_RECORD, INTERIM_RECORD, STOP_RECORD and EVENT_RECORD. During a session a CSCF sends a START_RECORD ACR to indicate that a session has been started; one or more INTERIM_RECORD ACRs to indicate charging values as the session proceeds; and a STOP_RECORD ACR to indicate that the session has been completed. Because Diameter accounting is cumulative the overall charge for a session cannot correctly be determined without all the records for the session. Thus, if a CCF has received a START_RECORD without at least one INTERIM-RECORD and a STOP_RECORD, or a STOP_RECORD without at least one INTERIM_RECORD and a START_RECORD, it cannot determine an overall charge for the session. The CCFs are configured to send such records to their assigned D-FADC-CCF 52 In these situations.

If there is a failure of the link to the P-CCF 50 then accounting messages sent to the S-CCF 51 are marked to indicate that they might duplicate messages received at the P-CCF 50. A D (duplicate) bit could be defined in the charging messages that could be set to allow this to be indicated. The CCFs could be configured to send to the D-FADC-CCF 52 messages for sessions in which one or more messages were received with D-bits set. If such a D-bit is not implemented then the D-FADC-CCF could identify messages from a single session by means of their session IDs, which will be the same, and by means of their time-stamps (e.g. if session IDs are re-used over long periods).

The primary and secondary CCFs are configured not to bill sessions for which they have send charging messages to the D-FADC-CCF. Those sessions will be billed by means of the D-FADC-CCF.

The present invention is not limited to 3G networks.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A communication system for supporting a communication session of a terminal (6), the communication system comprising:
at least one charging unit (4, 11) arranged to monitor the communication session and generate a plurality of charging messages together indicating a total charge for the communication session;
a primary charging data collection unit (50), a secondary charging data collection unit (51) and a backup charging data collection unit (52), each charging collection unit being capable of receiving and correlating charging messages for the communication session;
**characterised by**:
the or each charging unit (4, 11) is arranged to transmit the charging messages to the primary charging data collection unit (50) or, if the charging unit (4, 11) determines that a charging message for the communication session has not been correctly received by the primary charging data collection unit (50), to the secondary charging data collection unit (51); and
the primary and secondary charging data collection units (50, 51) are arranged to, if they have received only some of the charging messages for the communication session, transmit the content of the charging messages that they have received for the session to the backup charging data collection unit (52).

2. A communication system as claimed in claim 1, wherein the backup data collection unit (52) is arranged to, on receiving from the primary and secondary charging data collection units (50, 51) content of charging messages for the session, eliminate duplicate content of charging messages from the received content of charging messages.

3. A communication system as claimed in claim 2, wherein the or each charging unit (4, 11) is arrange to, for each of the charging messages for the session that is sent to the secondary charging unit (51), set a flag in the message indicating that the content of the message may be duplicated in data received by the backup data collection unit (52), and the backup data collection unit (52) is arranged to eliminate duplicate content of charging messages from the received content of charging messages at least partially in dependence on the setting of the flag in portions of that received content.

4. A communication system as claimed in any preceding claim, wherein the terminal is associated with a subscriber entity (6) and the communication system includes several charging data collection units (50, 51) and a subscriber database which stores for each subscriber a record of which of the charging data collection units is the primary charging data unit (50) and which is the secondary charging data unit (51) for charging data relating to charges to be attributed to that subscriber.

5. A communication system as claimed in claim 4, wherein the communication system is arranged to, on establishment of the session, access the subscriber database to determine which of the charging data collection units is to be the primary charging data collection unit (50) for the session and which of the charging data collection units is to be the secondary charging data collection unit (51) for the session.

6. A communication system as claimed in any preceding claim, wherein the primary and secondary charging data collection units (50, 51) are arranged to, on receiving a charging message from a charging unit (4, 11), transmit an acknowledgement for that message to that charging unit (4, 11).

7. A communication system as claimed in any preceding claim, wherein the or each charging unit (4, 11) is arranged to determine that a charging message has not been correctly received by the primary charging data collection unit (50) if on expiry of a preset period after it has transmitted a charging message the charging unit (4, 11) has not received an acknowledgement for the charging message.

8. A communication system as claimed in any preceding claim, wherein the charging messages which together indicating a total charge for the communication session include a start message indicative of the commencement of the session.

9. A communication system as claimed in any preceding claim, wherein the charging messages which together indicating a total charge for the communication session include a charge message indicative of a charge for at least a portion of the session.

10. A communication system as claimed in any preceding claim, wherein the charging messages which together indicating a total charge for the communication session include a stop message indicative of termination of the session.

11. A communication system as claimed in claim 10 as dependent on claim 8, wherein the primary charging unit (50) is arranged to determine that it has received only some of the charging messages for the communication session if on expiry of a preset period after receiving the start message for the session it has not received a stop message for the session.

12. A communication system as claimed in claim 10 as dependent on claims 8 and 9, wherein the secondary charging unit (51) is arranged to determine that it has received only some of the charging messages for the communication session if it has received a charge or stop message but no start message for the session.

13. A communication system as claimed in any preceding claim, wherein the terminal (6) is a mobile station capable of communicating by radio with the communication system.

14. A communication system as claimed in any preceding claim, wherein the primary, secondary and backup charging data collection units (50, 51, 52) are CCFs.

15. A communication system as claimed in any preceding claim, wherein the or each charging unit (4, 11) is a CSCF.

16. A communication system as claimed in any preceding claim, wherein the communication system is a third generation mobile communications system.

17. A communication system as claimed in any preceding claim, wherein the or each charging unit (4, 11) is arranged to, if it determines that a charging message for the communication session has not been correctly received by the primary charging data collection unit (50), transmit no further charging messages for that session to the primary charging data collection unit (50).

18. A communication system as claimed in any preceding claim, wherein the primary charging data collection unit (50) and the secondary charging data collection unit (51) are adapted to communicate with the backup charging data collection unit (52) by means of the Diameter protocol.

19. A communication system as claimed in any preceding claim, wherein the or each charging unit (4, 11) is adapted to communicate with the primary charging data collection unit (50) and the secondary charging data collection unit (51) by means of the Diameter protocol.

20. A communication system as claimed in any preceding claim, wherein the system comprises a plurality of charging data collection units (50, 51, 52), and each charging data collection unit acting as a primary charging data collection unit (50) in conjunction with a secondary charging data collection unit (51) treats as backup charging data collection unit (52) the same unit as does the corresponding secondary charging data collection unit (51).

21. A method for supporting a communication session of a terminal (6) by means of a communication system comprising: at least one charging unit (4, 11), a primary charging data collection unit (50), a secondary charging data collection unit (51) and a backup charging data collection unit (52), each charging collection unit being for receiving and correlating charging messages for the communication session; the method comprising:
initiating the communication session;
monitoring the communication session by means of the charging unit;
generating at the charging unit a plurality of charging messages together indicating a total charge for the communication session; and
**characterised by**:
determining at the charging unit whether any of the charging messages previously generated for a session has not been correctly received by the primary charging data collection unit; and if not transmitting charging messages for the session to the primary charging data collection unit otherwise transmitting charging messages for the session to the secondary charging data collection unit; and
the primary and secondary charging data collection units (50, 51), if they have received only some of the charging messages for the communication session, transmitting the content of the charging messages that they have received for the session to the backup charging data collection unit (52).

22. A backup charging data collection unit for operation in a communication system capable of supporting a communication session of a terminal, the communication system comprising: at least one charging unit arranged to monitor the communication session and generate a plurality of charging messages together indicating a total charge for the communication session; a primary charging data collection unit and a secondary charging data collection unit, the primary and secondary each charging collection units being capable of receiving and correlating charging messages for the communication session; and **characterised by** the or each charging unit arranged to transmit the charging messages to the primary charging data collection unit or, if the charging unit determines that a charging message for the communication session has not been correctly received by the primary charging data collection unit, to the secondary charging data collection unit; and the primary and secondary charging data collection units are arranged to, if they have received only some of the charging messages for the communication session, transmit the content of the charging messages that they have received for the session to the backup charging data collection unit; the backup data collection unit being arranged to receive and correlate charging messages for the communication session sent to it by the primary and secondary data collection units.

## Patentansprüche

1. Kommunikationssystem zur Unterstützung einer Kommunikationssitzung eines Endgerätes (6), wobei das Kommunikationssystem umfasst
wenigstens eine Gebühreneinheit (4, 11), die ausgelegt ist, die Kommunikationssitzung zu überwachen und eine Mehrzahl von Gebührennachrichten zu erzeugen, die zusammen eine Gesamtgebühr für die Kommunikationssitzung angeben;
eine primäre Gebührendatenerfassungseinheit (50), eine sekundäre Gebührendatenerfassungseinheit (51) und eine Sicherungsgebührendatenerfassungseinheit (52), wobei jede Gebührenerfassungseinheit Gebührennachrichten für die Kommunikationssitzung zu empfangen und zu korrelieren vermag;
**gekennzeichnet durch**
die oder jede Gebühreneinheit (4, 11) ist ausgelegt, die Gebührennachrichten zu der primären Gebührendatenerfassungeinheit (50) oder, wenn die Gebühreneinheit (4, 11) feststellt, dass eine Gebührennachricht für die Kommunikationssitzung von der primären Gebührendatenerfassungseinheit (50) nicht korrekt empfangen wurde, zu der zweiten Gebührendatenerfassungseinheit (51) zu übertragen; und
die primären und sekundären Gebührendatenerfassungseinheiten (50, 51) ausgelegt sind, wenn sie nur einige der Gebührennachrichten für die Kommunikationssitzung erhalten haben, den Inhalt der Gebührennachrichten, die sie für die Sitzung erhalten haben, zu der Sicherungsgebührendatenerfassungseinheit (52) übertragen.

2. Kommunikationssystem nach Anspruch 1, wobei die Sicherungsdatenerfassungseinheit (53) ausgelegt ist, beim Empfangen von Inhalt von Gebührennachrichten für die Sitzung von den primären und sekundären Gebührendatenerfassungseinheiten (50, 51) duplizierten Inhalt von Gebührennachrichten aus dem erhaltenen Inhalt von Gebührennachrichten zu entfernen.

3. Kommunikationssystem nach Anspruch 2, wobei die oder jede Gebühreneinheit (4, 11, 12) ausgelegt ist, für jede der Gebührennachrichten für die Sitzungen, die zu der sekundären Gebühreneinheit (51) gesendet wird, in der Nachricht ein Flag zu setzen, das angibt, dass der Inhalt der Nachricht in den von der Sicherungsdatenerfassungseinheit (52) erhaltenen Daten dupliziert sein kann, und die Sicherungsdatenerfassungseinheit (52) ausgelegt ist, duplizierten Inhalt von Gebührennachrichten von dem erhaltenen Inhalt aus den Gebührennachrichten wenigstens teilweise in Abhängigkeit von dem Setzen des Flag in Teilen dieses erhaltenen Inhalts zu entfernen.

4. Kommunikationssystem nach einem vorherigen Anspruch, wobei das Endgerät einer Teilnehmereinheit (6) zugeordnet ist und das Kommunikationssystem einige Gebührendatenerfassungseinheiten (50, 51) und eine Teilnehmerdatenbasis aufweist, die für jeden Teilnehmer eine Aufstellung darüber speichert, welche der Gebührendatenerfassungseinheiten die primäre Gebührendateneinheit (50) und welche die sekundärere Gebührendateneinheit (53) für Gebührendaten ist, die diesem Teilnehmer zuzuordnende Gebühren betreffen.

5. Kommunikationssystem nach Anspruch 4, wobei das Kommunikationssystem ausgelegt ist, beim Aufbau der Sitzung auf die Teilnehmerdatenbasis zuzugreifen, um zu ermitteln, welche der Gebührendatenerfassungseinheiten die primäre Gebührendatenerfassungseinheit (50) für die Sitzung sein soll und welche der Gebührendatenerfassungseinheiten die sekundäre Gebührendatenerfassungseinheit (51) für die Sitzung sein soll.

6. Kommunikationssystem nach einem vorherigen Anspruch, wobei die primären und sekundären Gebührendatenerfassungseinheiten (50, 51) ausgelegt sind, beim Erhalten einer Gebührennachricht von einer Gebühreneinheit (4, 11) eine Bestätigung für diese Nachricht zu dieser Gebühreneinheit (4, 11) zu übertragen.

7. Kommunikationssystem nach einem vorherigen Anspruch, wobei die oder jede Gebühreneinheit (4, 11) ausgelegt ist, um zu ermitteln, dass eine Gebührennachricht nicht von der primären Gebührendatenerfassungseinheit (50) korrekt erhalten wurde, wenn nach Ablauf einer vorgegebenen Zeitdauer, nachdem sie Gebührennachricht übertragen hat, die Gebühreneinheit (4, 11) keine Bestätigung für die Gebührennachricht erhalten hat.

8. Kommunikationssystem nach einem vorherigen Anspruch, wobei die Gebührennachrichten, die zusammen eine Gesamtgebühr für die Kommunikationssitzung angeben, eine Startnachricht aufweisen, die den Beginn der Sitzung angibt.

9. Kommunikationssystem nach einem vorherigen Anspruch, wobei die Gebührennachrichten, die zusammen eine Gesamtgebühr für die Kommunikationssitzung angeben, eine Gebühr-Nachricht aufweisen, die eine Gebühr für wenigstens einen Teil der Sitzung angeben.

10. Kommunikationssystem nach einem vorherigen Anspruch, wobei die Gebührennachrichten, die zusammen eine Gesamtgebühr für die Kommunikationssitzungen angeben, eine Stoppnachricht aufweisen, die das Ende der Sitzung angibt.

11. Kommunikationssystem nach Anspruch 10 soweit von Anspruch 8 abhängig, wobei die primäre Gebühreneinheit (50) ausgelegt ist, zu ermitteln, dass sie nur einige der Gebührennachrichten für die Kommunikationssitzungen erhalten hat, wenn sie nach Ablauf einer vorgegebenen Zeitdauer nach Erhalt der Startnachricht für die Sitzung keine Stoppnachricht für die Sitzung erhalten hat.

12. Kommunikationssystem nach Anspruch 10 soweit von den Ansprüches 8 bis 9 abhängig, wobei die sekundäre Gebühreneinheit (51) ausgelegt ist, dass sie nur einige der Gebührennachrichten für die Kommunikationssitzung erhalten hat, wenn sie eine Gebühr- oder Stoppnachricht aber keine Startnachricht für die Sitzung erhalten hat.

13. Kommunikationssystem nach einem vorherigen Anspruch, wobei das Endgerät (6) eine Mobilstation ist, die mittels Funk mit dem Kommunikationssystem zu kommunizieren vermag.

14. Kommunikationssystem nach einem vorherigen Anspruch, wobei die primären, sekundären und Sicherungs-Gebührendatenerfassungseinheiten (50, 51, 52) CCFs sind.

15. Kommunikationssystem nach einem vorherigen Anspruch, wobei die oder jede Gebühreneinheit (4, 11) eine CSCFs ist.

16. Kommunikationssystem nach einem vorherigen Anspruch, wobei das Kommunikationssystem ein Mobilkommunikationssystem der dritten Generation ist.

17. Kommunikationssystem nach einem vorherigen Anspruch, wobei die oder jede Gebühreneinheit (4, 11) ausgelegt ist, keine weiteren Gebührennachrichten für diese Sitzung zu der primären Gebührendatenerfassungseinheit (50) zu übertragen, wenn sie feststellt, dass eine Gebührennachricht für die Kommunikationssitzung von der primären Gebührendatenerfassungseinheit (50) nicht erhalten wurde.

18. Kommunikationssystem nach einem vorherigen Anspruch, wobei die primäre Gebührendatenerfassungseinheit (50) und die sekundäre Gebührendatenerfassungseinheit (51) so ausgelegt sind, mittels des Diameter-Protokolls mit der Sicherungsgebührendatenerfassungseinheit (52) zu kommunizieren.

19. Kommunikationssystem nach einem vorherigen Anspruch, wobei die oder jene Gebühreneinheit (11) so ausgelegt ist, mittels des Diameter-Protokolls mit der primären Gebührendatenerfassungseinheit (50) und der sekundären Gebührendatenerfassungseinheit (51) zu kommunizieren.

20. Kommunikationssystem nach einem vorherigen Anspruch, wobei das System eine Mehrzahl von Gebührendatenerfassungseinheiten (50, 51, 52) umfasst und jede Gebührendatenerfassungseinheit, die in Verbindung mit einer sekundären Gebührendatenerfassungseinheit (51) als primäre Gebührendatenerfassungseinheit (51) dient, die gleiche Einheit als Sicherungsgebührendatenerfassungseinheit (52) wie die entsprechende sekundäre Gebührendatenerfassungeinheit (51) behandelt.

21. Verfahren zur Unterstützung einer Kommunikationssitzung eines Endgerätes mittels eines Kommunikationssystems, das umfasst: wenigstens eine Gebühreneinheit (4, 11), eine primäre Gebührendatenerfassungseinheit (50), eine sekundäre Gebührendatenerfassungseinheit (51) zu und eine Sicherungsgebührendatenerfassungseinheit (52), wobei jede Gebührenerfassungseinheit zum Erhalten und Korrelieren von Gebührennachrichten für die Kommunikationssitzung dient, wobei das Verfahren umfasst:
Einleiten der Kommunikationssitzung;
Überwachen der Kommunikationssitzung mittels der Gebühreneinheit;
Erzeugen bei der Gebühreneinheit von einer Mehrzahl von Gebührennachrichten, die zusammen eine Gesamtgebühr für die Kommunikationssitzung angeben; und **gekennzeichnet durch**:
Ermitteln bei der Gebühreneinheit, ob eine der Gebührennachrichten, die zuvor für eine Sitzung erzeugt wurden, von der primären Gebührendatenerfassungseinheit korrekt erhalten wurde; und, falls dies nicht der Fall ist, Übertragen von Gebührennachrichten für die Sitzung zu der primären Gebührendatenerfassungseinheit, wobei ansonsten Gebührennachrichten für die Sitzung zu der sekundären Gebührendatenerfassungseinheit übertragen werden; und
die primären und sekundären Gebührendatenerfassungseinheiten (50, 51) den Inhalt der Gebührennachrichten, die sie für die Sitzungen erhalten haben, zu der Sicherungsgebührendatenerfassungseinheit (52) übertragen, wenn sie nur einige der Gebührennachrichten für die Kommunikationssitzungen erhalten haben.

22. Sicherungsgebührendatenerfassungseinheit zum Betrieb in einem Kommunikationssystem, das eine Kommunikationssitzung eines Endgeräts zu unterstützen vermag, wobei das Kommunikationssystem umfasst: wenigstens eine Gebühreneinheit, die ausgelegt ist, die Kommunikationssitzung zu überwachen und eine Mehrzahl von Gebührennachrichten zu erzeugen, die zusammen eine Gesamtgebühr für die Kommunikationssitzung angeben; eine primäre Gebührendatenerfassungseinheit und eine sekundäre Gebührendatenerfassungseinheit, wobei die primären und sekundären Gebührendatenerfassungseinheit Gebührennachrichten für die Kommunikation Sitzung zu empfangen und zu korrelieren vermögen; und **gekennzeichnet durch** die oder jede Gebühreneinheit, die ausgelegt ist, die Gebührennachrichten zu der primären Gebührendatenerfassungseinheit oder, wenn die Gebühreneinheit feststellt, dass eine Gebührennachricht für die Kommunikationssitzung von der primären Gebührendatenerfassungseinheit nicht korrekt empfangen wurde, zu der sekundären Gebührendatenerfassungseinheit zu übertragen; und die primären und sekundären Gebührendatenerfassungseinheiten ausgelegt sind, wenn sie nur einige der Gebührennachrichten für die Kommunikationssitzungen erhalten haben, den Inhalt der Gebührennachrichten, die sie für die Sitzung erhalten haben, zu der Sicherungsgebührendatenerfassungseinheit zu übertragen, wobei die Sicherungsdatenerfassungseinheit ausgelegt ist, Gebührennachrichten für die Kommunikationssitzung zu erhalten und zu korrelieren, die dieser von den primären und sekundären Datenerfassungseinheiten gesendet wurden.

## Revendications

1. Système de communication pour supporter une session de communication d'un terminal (6), le système de communication comprenant :
au moins une unité de facturation (4, 11) agencée pour surveiller la session de communication et pour générer une pluralité de messages de facturation indiquant ensemble les frais totaux pour la session de communication ;
une unité de collecte de données de facturation primaire (50), une unité de collecte de données de facturation secondaire (51) et une unité de collecte de données de facturation de sauvegarde (52), chaque unité de collecte de facturation étant capable de recevoir et de mettre en corrélation les messages de facturation pour la session de communication ;
**caractérisé en ce que** :
la ou chaque unité de facturation (4, 11) est agencée pour transmettre les messages de facturation à l'unité de collecte de données de facturation primaire (50) ou, si l'unité de facturation (4, 11) détermine qu'un message de facturation pour la session de communication n'a pas été correctement reçu par l'unité de collecte de données de facturation primaire (50), à l'unité de collecte de données de facturation secondaire (51) ; et
les unités de collecte de données de facturation primaire et secondaire (50, 51) sont agencées pour transmettre, si elles ont reçu seulement quelques-uns des messages de facturation pour la session de communication, le contenu des messages de facturation qu'elles ont reçus pour la session à l'unité de collecte de données de facturation de sauvegarde (52).

2. Système de communication selon la revendication 1, dans lequel l'unité de collecte de données de sauvegarde (52) est agencée pour éliminer, lors de la réception à partir des unités de collecte de données de facturation primaire et secondaire (50, 51) du contenu des messages de facturation pour la session, le contenu dupliqué des messages de facturation du contenu reçu des messages de facturation.

3. Système de communication selon la revendication 2, dans lequel la ou chaque unité de facturation ((4, 11) est agencée pour établir, pour chacun des messages de facturation pour la session qui est envoyé à l'unité de facturation secondaire (51) un indicateur dans le message indiquant que le contenu du message peut être dupliqué dans les données reçues par l'unité de collecte de données de sauvegarde (52), et l'unité de collecte de données de sauvegarde (52) est agencée pour éliminer le contenu dupliqué des messages de facturation du contenu reçu des messages de facturation au moins partiellement en fonction du paramétrage de l'indicateur dans les parties du contenu reçu.

4. Système de communication selon l'une quelconque des revendications précédentes, dans lequel le terminal est associé à une entité abonné (6) et le système de communication inclut plusieurs unités de collecte de données de facturation (50, 51) et une base de données d'abonnés qui stocke pour chaque abonné un enregistrement indiquant laquelle des unités de collecte de données de facturation est l'unité de données de facturation primaire (50) et laquelle est l'unité de données de facturation secondaire (51) pour facturer des données se rapportant aux frais qui doivent être attribués à cet abonné.

5. Système de communication selon la revendication 4, dans lequel le système de communication est agencé pour avoir accès, lors de l'établissement de la session, à la base de données d'abonnés pour déterminer laquelle des unités de collecte de données de facturation doit être l'unité de collecte de données de facturation primaire (50) pour la session et laquelle des unités de collecte de données de facturation doit être l'unité de collecte de données de facturation secondaire (51) pour la session.

6. Système de communication selon l'une quelconque des revendications précédentes, dans lequel les unités de collecte de données de facturation primaire et secondaire (50, 51) sont agencées pour transmettre, lors de la réception d'un message de facturation provenant d'une unité de facturation (4, I1), un accusé de réception de ce message à cette unité de facturation (4, 11).

7. Système de communication selon l'une quelconque des revendications précédentes, dans lequel la ou chaque unité de facturation (4, 11) est agencée pour déterminer qu'un message de facturation n'a pas été correctement reçu par l'unité de collecte de données de facturation primaire (50) si, à l'expiration d'une période prédéterminée après qu'elle a transmis un message de facturation, l'unité de facturation (4, 11) n'a pas reçu un accusé de réception pour le message de facturation.

8. Système de communication selon l'une quelconque des revendications précédentes, dans lequel les messages de facturation, qui indiquent ensemble les frais totaux pour la session de communication, incluent un message de début indicatif du début de la session.

9. Système de communication selon l'une quelconque des revendications précédentes, dans lequel les messages de facturation, qui indiquent ensemble les frais totaux pour la session de communication, incluent un message de facturation indicatif des frais pour au moins une partie de la session.

10. Système de communication selon l'une quelconque des revendications précédentes, dans lequel les messages de facturation, qui indiquent ensemble les frais totaux pour la session de communication, incluent un message d'arrêt indicatif de la fin de la session.

11. Système de communication selon la revendication 10 dépendante de la revendication 8, dans lequel l'unité de facturation primaire (50) est agencée pour déterminer qu'elle a reçu seulement quelques-uns des messages de facturation pour la session de communication si, à l'expiration d'une période prédéterminée après la réception du message de début pour la session, elle n'a pas reçu un message d'arrêt pour la session.

12. Système de communication selon la revendication 10 dépendante des revendications 8 et 9, dans lequel l'unité de facturation secondaire (51) est agencée pour déterminer qu'elle a reçu seulement quelques-uns des messages de facturation pour la session de communication si elle a reçu un message de facturation ou d'arrêt mais pas de message de début pour la session.

13. Système de communication selon l'une quelconque des revendications précédentes, dans lequel le terminal (6) est une station mobile capable de communiquer par radio avec le système de communication.

14. Système de communication selon l'une quelconque des revendications précédentes, dans lequel les unités de collecte de données de facturation primaire, secondaire et de sauvegarde (50, 51, 52) sont des CCF.

15. Système de communication selon l'une quelconque des revendications précédentes, dans lequel la ou chaque unité de facturation (4, 11) est une CSCF.

16. Système de communication selon l'une quelconque des revendications précédentes, dans lequel le système de communication est un système de communication mobile de troisième génération.

17. Système de communication selon l'une quelconque des revendications précédentes, dans lequel la ou chaque unité de facturation (4, 11) est agencée pour ne pas transmettre, si elle détermine qu'un message de facturation pour la session de communication n'a pas été correctement reçu par l'unité de collecte de données de facturation primaire (50), d'autres messages de facturation pour cette session à l'unité de collecte de données de facturation primaire (50).

18. Système de communication selon l'une quelconque des revendications précédentes, dans lequel l'unité de collecte de données de facturation primaire (50) et l'unité de collecte de données de facturation secondaire (51) sont adaptées pour communiquer avec l'unité de collecte de données de facturation de sauvegarde (52) au moyen du protocole Diameter.

19. Système de communication selon l'une quelconque des revendications précédentes, dans lequel la ou chaque unité de facturation (4, 11) est adaptée pour communiquer avec l'unité de collecte de données de facturation primaire (50) et avec l'unité de collecte de données de facturation secondaire (51) au moyen du protocole Diameter.

20. Système de communication selon l'une quelconque des revendications précédentes, dans lequel le système comprend une pluralité d'unités de collecte de données de facturation (50, 51, 52) et chaque unité de collecte de données de facturation servant d'unité de collecte de données de facturation primaire (50) conjointement avec une unité de collecte de données de facturation secondaire (51) traite comme unité de collecte de données de facturation de sauvegarde (52) la même unité comme le fait l'unité de collecte de données de facturation secondaire correspondante (5 1).

21. Procédé pour supporter une session de communication d'un terminal (6) au moyen d'un système de communication comprenant : au moins une unité de facturation (4, 11), une unité de collecte de données de facturation primaire (50), une unité de collecte de données de facturation secondaire (51) et une unité de collecte de données de facturation de sauvegarde (52), chaque unité de collecte de facturation étant adaptée pour recevoir et mettre en corrélation les messages de facturation pour la session de communication ; le procédé comprenant les étapes consistant à :
initier la session de communication ;
surveiller la session de communication au moyen de l'unité de facturation ;
générer au niveau de l'unité de facturation une pluralité de messages de facturation indiquant ensemble les frais totaux pour la session de communication ; et **caractérisé par** les étapes consistant â :
déterminer au niveau de l'unité de facturation si l'un des messages de facturation générés auparavant pour une session n'a pas été correctement reçu par l'unité de collecte de données de facturation primaire ; et s'il n'y a pas de transmission de messages de facturation pour la session à l'unité de collecte de données de facturation primaire, transmettre alors les messages de facturation pour la session à l'unité de collecte de données de facturation secondaire ; et
les unités de collecte de données de facturation primaire et secondaire (50, 51), si elles ont reçu seulement quelques-uns des messages de facturation pour la session de communication, transmettent le contenu des messages de facturation qu'elles ont reçus pour la session à l'unité de collecte de données de facturation de sauvegarde (52).

22. Unité de collecte de données de facturation de sauvegarde destinée à être utilisée dans un système de communication capable de supporter une session de communication d'un terminal, le système de communication comprenant : au moins une unité de facturation agencée pour surveiller la session de communication et pour générer une pluralité de messages de facturation indiquant ensemble les frais totaux pour la session de communication ; une unité de collecte de données de facturation primaire et une unité de collecte de données de facturation secondaire, chacune des unités de collecte de données de facturation primaire et secondaire étant capables de recevoir et de mettre en corrélation les messages de facturation pour la session de communication ; et **caractérisée en ce que** la ou chaque unité de facturation est agencée pour transmettre les messages de facturation à l'unité de collecte de données de facturation primaire ou, si l'unité de facturation détermine qu'un message de facturation pour la session de communication n'a pas été correctement reçu par l'unité de collecte de données de facturation primaire, à l'unité de collecte de données de facturation secondaire ; et les unités de collecte de données de facturation primaire et secondaire sont agencées pour transmettre, si elles ont reçu seulement quelques-uns des messages de facturation pour la session de communication, le contenu des messages de facturation qu'elles ont reçus pour la session à l'unité de collecte de données de facturation de sauvegarde ; l'unité de collecte de données de sauvegarde étant agencée pour recevoir et mettre en corrélation les messages de facturation pour la session de communication qui lui sont envoyés par les unités de collecte de données primaire et secondaire.
